# EUROPÄISCHE PATENTSCHRIFT

(11) **EP 1 705 624 B1**
(45) Veröffentlichungstag und Bekanntmachung des Hinweises auf die Patenterteilung: **16.04.2008**
(21) Anmeldenummer: 06101691.1
(22) Anmeldetag: 15.02.2006
(51) Int. Cl.: G08G 1/16, B60T 7/12

(54) **Sicherheitsvorrichtung mit Selbstkontrolleinrichtung für Kraftfahrzeuge**
Safety Device with autocontrol device for vehicles
Dispositif de Sécurité avec auto-controle pour véhicules

(30) Priorität: 23.03.2005 DE 102005013448
(43) Veröffentlichungstag der Anmeldung: 27.09.2006
(73) Patentinhaber: ROBERT BOSCH GMBH, 70442 Stuttgart (DE)
(72) Erfinder: Meister, Dirk, 71696, Moeglingen (DE); Eisenlauer, Stephan, 71229, Leonberg (DE)

(56) Entgegenhaltungen:
- DE-A1- 10 118 903
- DE-A1- 10 231 557
- DE-A1- 10 338 760
- DE-A1- 19 739 655

## Beschreibung

### Stand der Technik

Die Erfindung betrifft eine Sicherheitsvorrichtung für Kraftfahrzeuge, mit einem Sensorsystem zur Erfassung des Verkehrsumfelds, einer Prädiktionseinrichtung zur Erkennung einer Kollisionsgefahr, und einem Aktorsystem zur Auslösung einer Reaktion in Abhängigkeit von der Kollisionsgefahr.

Bei einigen Ausführungsformen solcher Sicherheitsvorrichtungen wird das Aktorsystem lediglich durch einen Warnsignalgeber gebildet, so daß der Fahrer vor einer drohenden Kollisionsgefahr gewarnt werden kann. Bei anderen Ausführungsformen ist das Aktorsystem so ausgebildet, daß es aktiv in die Fahrzeugführung eingreift, beispielsweise in das Bremssystem, das Antriebssystem und/oder die Lenkung, um die Kollision möglichst zu vermeiden oder, wenn dies nicht mehr möglich sein sollte, zumindest die Kollisionsfolgen zu mildern.

Das Sensorsystem umfaßt einen oder mehrere Sensoren zur Ortung von Objekten im Umfeld des Fahrzeugs, beispielsweise Radarsensoren, Lidar-Sensoren, Videosensoren und dergleichen. Solche Sensoren sind häufig ohnehin am Fahrzeug vorhanden, da sie auch im Zusammenhang mit anderen Fahrerassistenzsystemen benötigt werden, die den Fahrer bei der Führung des Fahrzeugs unterstützen, beispielsweise im Zusammenhang mit einem Spurverlassens-Warnsystem oder einem adaptiven Geschwindigkeitsregler (ACC; Adaptive Cruise Control). Im letzteren Fall ist typischerweise ein Radarsensor vorhanden, mit dem die Abstände und Relativgeschwindigkeiten von Objekten im Vorfeld des Fahrzeugs gemessen werden. Im Rahmen der ACC-Funktion wird dann der Abstand zum unmittelbar vorausfahrenden Fahrzeug gemessen und automatisch geregelt.

Während jedoch ein ACC-System bisher zumeist nur auf bewegliche Objekte, nämlich auf fahrende Fahrzeuge, reagiert, sollte eine Sicherheitsvorrichtung der hier betrachteten Art möglichst auch in der Lage sein, stehende Hindernisse zu erkennen. Die zuverlässige Erkennung von Hindernissen und die Bewertung ihrer Relevanz bereitet jedoch Schwierigkeiten, weil sich z.B. des anhand von einem Radarsensor empfangenen Radarechos nicht ohne weiteres unterscheiden läßt, ob es sich bei dem Objekt, das das Echo verursacht hat, um ein echtes Hindernis handelt, beispielsweise ein auf der Fahrbahn stehendes Fahrzeug, oder um ein irrelevantes Objekt wie eine etwa auf der Straße liegende Blechdose oder dergleichen.

Es sind verschiedene Verfahren entwickelt oder vorgeschlagen worden, die eine genauere Relevanzbewertung von Hindernissen, insbesondere von ruhenden Objekten, ermöglichen. Ein geeignetes Kriterium hierfür ist z.B. die zeitliche Stabilität des Radarechos. Hilfreich ist in diesem Zusammenhang auch eine Auswertung der räumlichen Beziehung zwischen dem ruhenden Objekt und anderen beweglichen Objekten, bei denen es sich zumeist um vorausfahrende Fahrzeuge handeln wird. Wenn nämlich z.B. das ruhende Objekt von einem vorausfahrenden Fahrzeug überfahren wurde, so kann geschlossen werden, daß es sich nicht um ein relevantes Hindernis handelt. Es sind auch Systeme vorgeschlagen worden, bei denen zusätzlich das Videobild einer Videokamera ausgewertet wird, um eine genauere Klassifizierung der georteten Objekte zu ermöglichen.

Auch bei Einsatz dieser bekannten Verfahren können Fehlinterpretationen und damit Fehlreaktionen nicht mit Sicherheit ausgeschlossen werden. Mit zunehmender Komplexität des Sensorsystems und der zugehörigen Auswertungsalgorithmen steigt auch die Gefahr, daß es durch eine Fehlfunktion oder den Ausfall einer oder mehrerer Systemkomponenten zu systematischen Fehlern kommt.

Aus der gattungsgemäßen DE 103 38 760 A1 ist ein Kraftfahrzeug mit einem Pre-Safe-System bekannt, welches aktive und/oder, passive Sicherheitseinrichtungen umfasst, welche in Abhängigkeit von Informationen, welche wenigstens von einer Fahrzeugumgebungs-Erkennungseinrichtung und einer Fahrsituationsdaten-Erfassungseinrichtung aufgenommen und in einer Datenauswerteeinrichtung ausgewertet werden, angesteuert werden. Die Aktivierung wenigstens eines Teils der aktiven und/oder passiven Sicherheitseinrichtungen erfolgt, wenn die Informationen der Fahrzeugumgebungs-Erkennungseinrichtung ein potentielles Kollisionsobjekt repräsentieren und die Daten der Fahrsituationsdaten-Erfassungseinrichtung ein Fahrerverhalten repräsentieren, welches für eine Kollisionsplausibilisierung vordefiniert ist.

Aus der DE 10118 903 A1 ist ein Fahrerassistenzsystem für ein Kraftfahrzeug bekannt, das wenigstens einen Sensor zum Erfassen der Entfernung des Fahrzeuges von einem Objekt und eine Steuereinheit zum Ansteuern von Funktionsgruppen des Kraftfahrzeuges in Abhängigkeit vom Erfassungsergebnis des Sensors umfasst Die Steuereinheit ist zwischen einer Einparkhilfe-Betriebsart und einer Pre-crash-Betriebsart abhängig von der Geschwindigkeit des Fahrzeuges umschaltbar. Eine Umschaltung zwischen einer Geschwindigkeitsregelungs-Betriebsart und der Pre-crash-Betriebsart ist abhängig von einer von dem Sensor gemessenen Bewegung eines Objektes relativ zu dem Fahrzeug umschaltbar.

Aus der DE 197 39 655 A1 ist ein Rückhaltesystem bekannt, das mit hoher Zuverlässigkeit ein oder mehrere Rückhalteeinrichtungen auslöst, falls für Fahrzeuginsassen bei einer Kollision die Gefahr einer Verletzung gegeben ist. Dieses Rückhaltesystem ist mit mindestens einem Sitzpositionssensor ausgestattet, mit dem eine Verränderung der Sitzposition mindestens eines Fahrzeuginsassen feststellbar ist, wobei eine Steuereinrichtung ein erstes Kriterium für das Auslösen eines oder mehrerer Rückhalteeinrichtungen bildet, wenn die Veränderungsgeschwindigkeit der Sitzposition eine vorgebbare Schwelle übersteigt. Die Steuereinrichtung bildet ein zweites Kriterium für das Auslösen eines oder mehrerer Rückhalteeinrichtungen, wenn ein oder mehrere Precrash-Sensoren eine bevorstehende Kollision signalisieren. Die Steuereinrichtung veranlaßt erst dann die Auslösung einer oder mehrerer Rückhalteeinrichtungen, wenn beide Auslösekriterien gegeben sind.

Aus der DE 102 31557 A1 ist ein Verfahren und eine Vorrichtung zum Auslösen und Durchführen einer Verzögerung eines Fahrzeugs zur Vermeidung einer Kollision bekannt, bei welchem mittels einer Vorrichtung zur Abstands- und Geschwindigkeitsregelung des Fahrzeugs Objekte im Sensorerfassungsbereich erkannt und für jedes erkannte Objekt Meßgrößen ermittelt werden, die erkannten Objekte aufgrund der ermittelten, zugehörigen Meßgrößen verschiedenen Objektklassen zugeordnet werden und aufgrund der Zuordnung der erkannten Objekte zur jeweiligen Klasse die Bewegungstrajektorien der Objekte prädiziert werden. Aus diesen prädizierten Bewegungstrajektorien der Objekte und der zugehörigen, erkannten Objektklassen wird weiterhin ein Kollisionsrisiko ermittelt und bei Vorliegen eines vorgebbaren Kollisionsrisikos werden die Verzögerungseinrichtungen des Fahrzeugs in Abhängigkeit des Grades des Kollisionsrisikos angesteuert.

Bei Kollisionswarnsystemen führen solche Fehler und die daraus resultierenden Fehlwarnungen zu einer Beeinträchtigung des Komforts und des Sicherheitsgefühls des Fahrers und damit zu einer abnehmenden Akzeptanz der Sicherheitsvorrichtung. Noch gravierender sind die Folgen bei Sicherheitsvorrichtungen, die aktiv in die Fahrzeugführung eingreifen, etwa bei einer automatischen Notbremsfunktion. In diesem Fall können Fehlreaktionen des Systems, etwa eine unnötige Vollbremsung, ihrerseits zu einer Unfallquelle werden.

### Vorteile der Erfindung

Die Erfindung mit den in Anspruch 1 angegebenen Merkmalen ermöglicht es, Fehlfunktionen der Sicherheitsvorrichtung frühzeitig zu erkennen, so daß Fehlreaktionen durch eine automatische Deaktivierung oder Teil-Deaktivierung des Systems vermieden werden können.

Zu diesem Zweck umfaßt die erfindungsgemäße Sicherheitsvorrichtung eine Selbstkontrolleinrichtung, die dazu ausgebildet ist, eine Vorhersage der Prädiktionseinrichtung mit dem tatsächlichen Geschehen zu vergleichen und in Abhängigkeit von einer festgestellten Diskrepanz zumindest eine Teil-Deaktivierung des Aktorsystems zu veranlassen.

Die Erfindung beruht auf der Überlegung, daß die Prädiktionseinrichtung, die dazu dient, anhand der vom Sensorsystem gelieferten Daten eine drohende Kollisionsgefahr zu erkennen und zu bewerten, zumindest implizit eine Vorhersage über das künftige Verkehrsgeschehen macht. Wenn beispielsweise plötzlich ein Hindernis auftritt, etwa weil ein sehr langsames Fahrzeug von einer Nebenspur auf die eigene Spur einschert, so könnte eine solche Vorhersage sinngemäß etwa wie folgt lauten: "Selbst wenn das eigene Fahrzeug maximal verzögert wird (Vollbremsung), wird es nach einer bestimmten Zeit t_{c} zur Kollision kommen." Wenn dann durch die Sicherheitsvorrichtung eine automatische Notbremsung ausgelöst wird, es aber nach der Zeit t_{c} doch nicht zur Kollision gekommen ist, so weist die Prädiktionseinrichtung mit hoher Wahrscheinlichkeit eine Fehlfunktion auf. In diesem Fall wird die Notbremsfunktion automatisch deaktiviert, so daß sich derartige Ereignisse künftig nicht wiederholen können. Auf diese Weise wird für die Zukunft eine Beeinträchtigung der Verkehrssicherheit vermieden, ohne daß der Fahrer hierzu besondere Maßnahmen treffen muß.

In einer anderen Situation könnte die Vorhersage der Prädiktionseinrichtung etwa lauten: "Wenn das eigene Fahrzeug seine Geschwindigkeit beibehält und auch das Hindernis seinen Bewegungszustand nicht ändert, kommt es nach der Zeit t_{c} zur Kollision." Diese Vorhersage könnte etwa die Grundlage für die Ausgabe eines Warnsignals an den Fahrer bilden. Wenn dann jedoch das Hindernis "von selbst" wieder verschwindet, ohne daß der Fahrer in irgendeiner Weise reagiert hat, etwa mit einem Bremsmanöver oder einem Ausweichmanöver, und ohne daß es sonst eine plausible Erklärung für das Verschwinden des Hindernissen gibt, so deutet auch dies auf eine Fehlfunktion der Prädiktionseinrichtung hin. Wenn das Aktorsystem aufgrund der Erkennung derartiger Fehler deaktiviert wird, läßt sich unter Umständen erreichen, daß es gar nicht erst zu einer fehlerhaften Auslösung eines Notbremsvorgangs kommt.

Vorteilhafte Ausgestaltungen und Weiterbildungen der Erfindung sind in den Unteransprüchen angegeben.

Gemäß einer Ausführungsform besteht die Vorhersage der Prädiktionseinrichtung, die mit der Wirklichkeit verglichen wird, ausschließlich in der Vorhersage einer Kollision. Für die Überprüfung, ob tatsächlich eine Kollision stattgefunden hat oder nicht, stehen im Fahrzeug im allgemeinen verschiedene Signale zu Verfügung, beispielsweise Auslösesignale von Airbagsystemen, Signale von Crash- oder Beschleunigungssensoren sowie Signale eines elektronischen Stabilitätssystems (ESP), die z.B. Auskunft über Raddrehzahlen, Beschleunigungen, die Gierrate und dergleichen geben.

Wenn die Sicherheitsvorrichtung auch eine Warnfunktion aufweist, so werden bei der Erkennung einer Fehlfunktion vorzugsweise nur diejenigen Aktorkomponenten deaktiviert, die in die Fahrzeugführung eingreifen, während die Warnfunktion bestehen bleibt. Auf diese Weise wird einerseits eine Gefährdung durch Fehlreaktionen des Systems vermieden, während andererseits die vorteilhafte Möglichkeit bestehen bleibt, den Fahrer vor Gefahren zu warnen, wenn auch gelegentliche Fehlwarnungen in Kauf genommen werden müssen.

Gemäß einer Weiterbildung führt eine einmalige Erkennung einer Fehlfunktion der Prädiktionseinrichtung nicht unmittelbar zur Deaktivierung des Aktorsystems, sondern das Aktorsystem wird erst dann aktiviert, wenn sich solche Fehler häufen. Dies ist besonders dann zweckmäßig, wenn nicht nur der Eintritt von vorhergesagten Kollisionen überprüft wird, sondern auch andere Vorhersagen, die noch nicht unmittelbar zu einer Notbremsung, sondern vielleicht nur zur Ausgabe eines Warnsignals führen. Die Fehlprognosen können dann bei der Bestimmung der Fehlerhäufigkeit, die letztlich zur Selbstabschaltung führt, je nach ihrer Bedeutung unterschiedlich gewichtet werden. Es ist auch denkbar, daß bei Überschreitung einer ersten Häufigkeitsschwelle zunächst nur die Aktorkomponenten abgeschaltet werden, die in die Fahrzeugführung eingreifen, und daß bei Überschreitung eines höheren zweiten Schwellenwertes auch die Warnfunktion deaktiviert wird.

### Zeichnung

Ein Ausführungsbeispiel der Erfindung ist in den Zeichnungen dargestellt und in der nachfolgenden Beschreibung näher erläutert.

Es zeigen:
- Figur 1: eine Skizze eines Kraftfahrzeugs mit einer erfindungsgemäßen Sicherheitsvorrichtung;
- Figur 2: ein Blockdiagramm der Sicherheitsvorrichtung; und
- Figur 3: ein Flußdiagramm zur Erläuterung der Funktionsweise.

### Beschreibung des Ausfiihrungsbeispiels

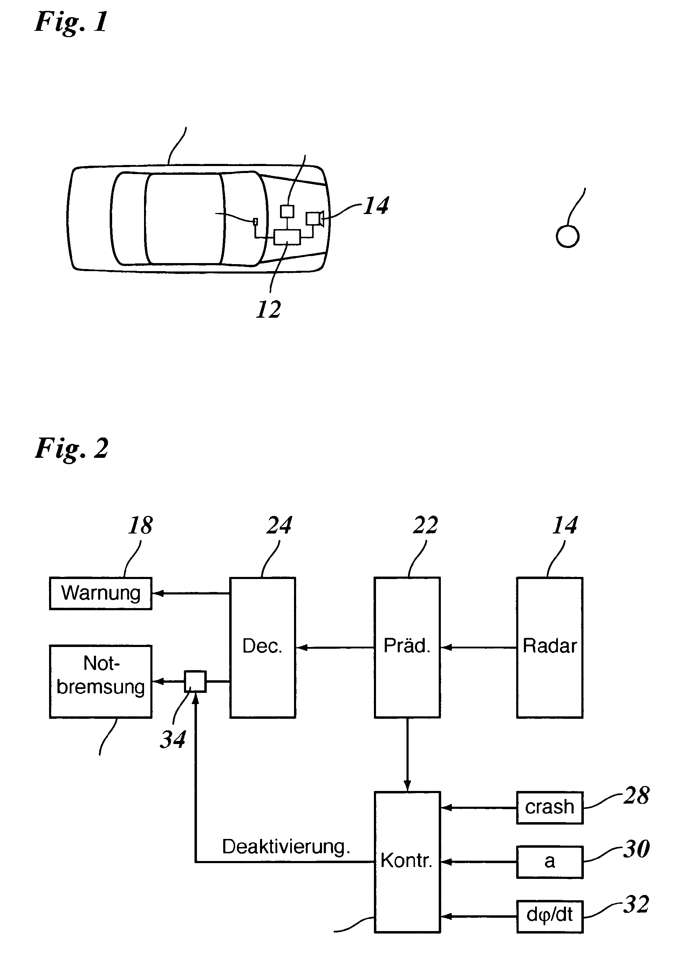

Das in Figur 1 gezeigte Kraftfahrzeug 10 weist eine Sicherheitsvorrichtung 12 auf, die beispielsweise eine Kollisionswarnfunktion und eine automatische Notbremsfunktion hat. Kernstück der Sicherheitsvorrichtung 12 ist ein elektronisches Datenverarbeitungssystem, das beispielsweise durch einen oder mehrere Mikroprozessoren gebildet wird. Als Sensorsystem 14 ist der Sicherheitsvorrichtung 12 zum Beispiel ein Radarsensor 14 zugeordnet, der vom im Fahrzeug eingebaut ist und dazu dient, Abstände, Relativgeschwindigkeiten und Azimutwinkel von Objekten 16 im Vorfeld des Fahrzeugs zu messen. Ein zugehöriges Aktorsystem umfaßt einen Warnsignalgeber 18 zur Ausgabe eines Kollisionwarnsignals und eine Schnittstelle 20 zur Ansteuerung des Bremssystems des Fahrzeugs.

In Figur 2 ist die Sicherheitsvorrichtung 12 als Blockdiagramm dargestellt. Die Signale des Sensorsystems 14 werden in einem Funktionsmodul der Sicherheitsvorrichtung ausgewertet, das hier als Prädiktionseinrichtung 22 bezeichnet werden soll. Beispielsweise entscheidet die Prädiktionseinrichtung 22 mit Hilfe bekannter Algorithmen anhand der Abstands- und Azimutwinkeldaten eines georteten Objekts 16, ob sich das Objekt auf der von dem Fahrzeug 10 befahrenen Fahrspur befindet und somit ein potentielles Hindernis darstellt. Durch Vergleich der gemessenen Relativgeschwindigkeit mit der Eigengeschwindigkeit des Fahrzeugs 10 wird außerdem entschieden, ob es sich bei dem Objekt 16 um ein ruhendes oder ein bewegtes Objekt handelt. Bewegte Objekte werden generell als relevante Hindernisse eingestuft. Im Fall von ruhenden Objekten wird anhand geeigneter Kriterien und Algorithmen entschieden, ob es sich um ein echtes Hindernis oder nur um ein irrelevantes Scheinhindernis handelt, beispielsweise eine auf der Straße liegende Blechdose, einen Radar-Reflex von einer quer über die Fahrbahn verlaufenden Dehnungsfuge und dergleichen. Es sind verschiedene Kriterien und Algorithmen dieser Art bekannt, die hier nicht näher erläutert werden sollen.

Weiterhin entscheidet die Prädiktionseinrichtung 22 für jedes echte Hindernis, ob von diesem Hindernis eine Kollisionsgefahr ausgeht oder nicht. Beispielsweise wird dazu für ruhende Objekte anhand des Abstands und der Relativgeschwindigkeit die Beschleunigung (Verzögerung) des Fahrzeugs 10 berechnet, die notwendig wäre, um eine Kollision zu vermeiden, wobei unterstellt wird, daß der Fahrer kein Ausweichmanöver vornimmt.

Die so berechnete Verzögerung wird mit der bekannten Maximalverzögerung verglichen, die mit dem Bremssystem des Fahrzeugs erreichbar ist. Diese Maximalverzögerung kann fest vorgegeben sein, sie kann jedoch auch in Abhängigkeit von verschiedenen Parametern variabel sein, etwa in Abhängigkeit von der Zuladung des Fahrzeugs oder in Abhängigkeit vom Fahrbahnreibungskoeffizienten, der mit Hilfe eines ESP-Systems festgestellt werden kann. Bei der Berechnung der nötigen Verzögerung können auch die Reaktionszeit des Fahrers sowie systembedingte Ansprechverzögerungen berücksichtigt werden.

Im Fall von fahrenden Hindernissen ist die notwendige Verzögerung auch von der (positiven oder negativen) Beschleunigung des Hindernisses abhängig. Die aktuelle Beschleunigung des Hindernisses kann berechnet werden, indem die Differenz zwischen Relativgeschwindigkeit und Eigengeschwindigkeit des Fahrzeugs 10 nach der Zeit differenziert wird. Für die zukünftige Beschleunigung des Hindernisses kann eine geeignete Annahme gemacht werden, etwa die Annahme, daß die Beschleunigung konstant bleibt oder daß die zeitliche Ableitung der Beschleunigung konstant bleibt.

Das Ergebnis der in der Prädiktionseinrichtung 22 angestellten Berechnungen sind bestimmte Vorhersagen über das künftige Geschehen. Wenn beispielsweise die notwendige Verzögerung größer ist als die erreichbare Maximalverzögerung, so lautet die Vorhersage: "Eine Kollision ist unvermeidbar und wird nach einer bestimmten Zeit t_{c} stattfinden." Wenn die notwendige Verzögerung zwar kleiner ist als die Maximalverzögerung aber oberhalb eines geeignet gewählten Schwellenwertes liegt, so lautet die Vorhersage: "Eine Kollision ist möglich und wird nach der Zeit t_{c} stattfinden, falls der Fahrer nicht reagiert." Diese Vorhersagen werden in einem weiteren Funktionsmodul der Sicherheitsvorrichtung, einer Entscheidungseinrichtung 24, ausgewertet und führen je nach Situation zur Ausgabe eines Warnsignals über den Warnsignalgeber 18 oder zur automatischen Einleitung einer Notbremsung über die Schnittstelle 20.

Der Prädiktionseinrichtung 22 ist eine Selbstkontrolleinrichtung 26 zugeordnet, die die Vorhersagen der Prädiktionseinrichtung mit der Wirklichkeit vergleicht. Zu diesem Zweck wertet die Selbstkontrolleinrichtung 26 Signale verschiedener fahrzeugeigener Sensoren aus. Im gezeigten Beispiel handelt es sich bei diesen Sensoren um einen Crash-Sensor 28, einen Beschleunigungssensor 30 und einen Gierratensensor 32. Diese Sensoren können dabei auch Teil anderer Fahrzeugsysteme sein, etwa eines Airbag-Systems, eines ESP-Systems und dergleichen, oder sie können ihrerseits Signale solcher Fahrzeugsysteme verwerten. Beispielsweise wird der Crash-Sensor 28 ein Signal liefern, das den Eintritt einer Kollision anzeigt, wenn mindestens ein Airbag des Fahrzeugs ausgelöst wurde. Die Signale des Beschleunigungssystems 30 und des Gierratensensors 32 können beispielsweise von einem ESP-System abgeleitet sein und geben ebenfalls Auskunft über den Eintritt einer Kollision, weil sich bei einer Kollision im allgemeinen die Beschleunigung und/oder die Gierrate des Fahrzeugs 10 abrupt ändern wird bzw. starke Ausschläge zeigt. Andererseits können die Signale des Beschleunigungssensors 30 und des Gierratensensors 32 jedoch auch Auskunft über das Verhalten des Fahrers geben und beispielsweise anzeigen, ob der Fahrer einen Bremsvorgang eingeleitet hat oder durch Eingriff in die Lenkung ein Ausweichmanöver eingeleitet hat.

Die Selbstkontrolleinrichtung 26 ist somit in der Lage, zu überprüfen, ob die Vorhersagen der Prädiktionseinrichtung 22 tatsächlich eingetreten sind. Wenn sich diese Vorhersagen als falsch erweisen, so deutet dies darauf hin, daß ein Fehler im Sensorsystem 14 oder in der Prädiktionseinrichtung 22 vorliegt. Beispiele für solche Fehler sind etwa Fehlfunktionen des Radarsensors, eine Fehljustierung des Sensors oder Hardware- oder Software-Fehler im Datenverarbeitungssystem, das die Funktion der Prädiktionseinrichtung 22 erfüllt.

Wenn die Selbstkontrolleinrichtung 26 einen solchen Fehler erkennt oder zumindest erkennt, daß solche Fehler sich häufen, so gibt sie ein Deaktivierungssignal an ein Schaltelement 34 aus, das daraufhin die Weiterleitung des Auslösesignals von der Entscheidungseinrichtung 24 an die Schnittstelle 20 blockiert und so die automatische Einleitung einer Notbremsung verhindert. Vorzugsweise wird der Fahrer gleichzeitig auf einem Display auf dem Armaturenbrett, durch Aufleuchten einer Anzeigelampe oder dergleichen einen Hinweis erhalten, daß die Notbremsfunktion deaktiviert wurde. Die Ausgabe von Auslösesignalen an den Warnsignalgeber 18 wird dagegen nicht blockiert, so daß der Fahrer auch weiterhin vor gefährlichen Situationen gewarnt wird.

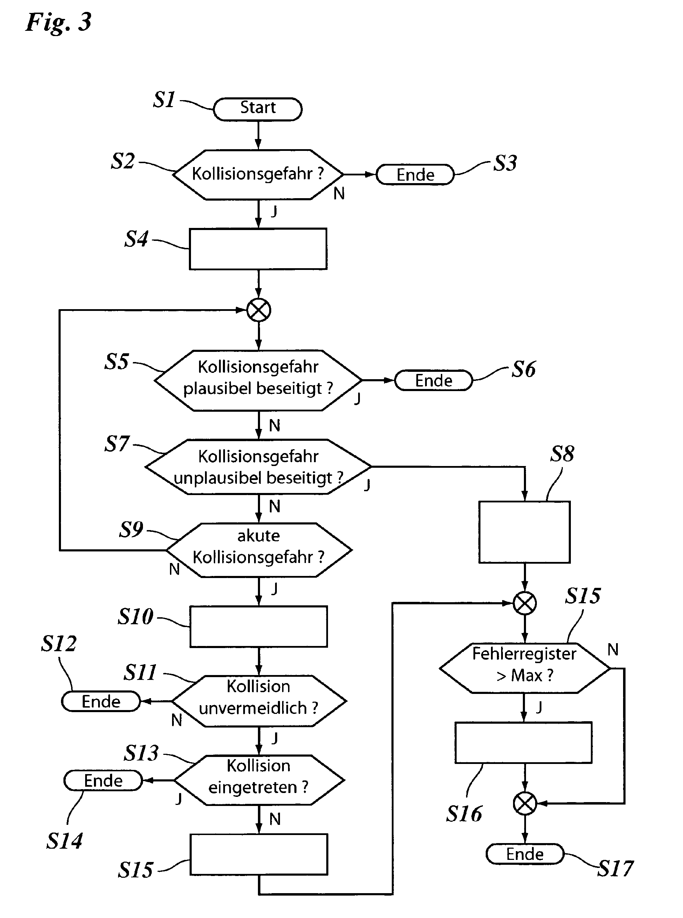

Die oben beschrieben Abläufe sollen nun anhand des in Figur 3 gezeigten Flußdiagramms beispielhaft näher erläutert werden. Das Flußdiagramm beschreibt eine Programmroutine, die im Datenverarbeitungssystem der Sicherheitsvorrichtung 12 periodisch aufgerufen wird und sowohl die Funktionen der Prädiktionseinrichtung 22 und der Entscheidungseinrichtung 24 als auch die Funktionen der Selbstkontrolleinrichtung 26 umfaßt.

Nachdem die Programmroutine mit Schritt S1 aufgerufen wurde, wird in Schritt S2 anhand der Daten des Sensorsystems 14 geprüft, ob eine Kollisionsgefahr besteht und somit die Ausgabe eines Warnsignals an den Fahrer veranlaßt ist. Wenn dies nicht der Fall ist, wird die Routine in Schritt S3 beendet. Andernfalls erfolgt in Schritt S4 die Ausgabe des Warnsignals über den Warnsignalgeber 18.

In Schritt S5 wird dann das Geschehen weiter beobachtet, und es wird fortlaufend geprüft, ob die Kollisionsgefahr auf plausible Weise beseitigt wurde. Eine plausible Beseitigung der Kollisionsgefahr könnte etwa dadurch erfolgen, daß der Fahrer auf den Warnhinweis reagiert und die Fahrzeugbremse betätigt oder einen Spurwechsel vornimmt, um dem Hindernis auszuweichen. Beides ist z. B. anhand der Signale des Beschleunigungssensors 30 und des Gierratensensors 32 und/oder anhand der Raddrehzahl und des Lenkwinkels erkennbar. Die Vorhersage der Prädiktionseinrichtung 22 ist dann erfüllt, weil die Prämisse, daß der Fahrer nicht reagiert, entfallen ist.

Sofern das Hindernis, von dem die Kollisionsgefahr ausgeht, ein vorausfahrendes Fahrzeug ist, könnte eine plausible Beseitigung der Kollisionsgefahr auch darin bestehen, daß das vorausfahrende Fahrzeug auf eine Nebenspur wechselt. Die entsprechende Querbewegung des Hindernisses ist mit Hilfe des winkelauflösenden Radarsensors erkennbar.

Wenn die Kollisionsgefahr auf plausible Weise beseitigt wurde, so wird die Routine mit Schritt S6 beendet. Andernfalls wird in Schritt S7 geprüft, ob die Kollisionsgefahr auf unplausible Weise beseitigt wurde. Dies wäre etwa dann der Fall, wenn das Hindernis plötzlich aus dem Ortungsbereich des Sensorsystems 14 verschwindet, ohne daß hierfür ein Grund erkennbar ist, oder wenn der Abstand oder die Relativgeschwindigkeit des Hindernisses abrupt zunimmt oder der Azimutwinkel sich abrupt ändert, d.h., wenn sich der Bewegungszustand des Hindernisses in einer Weise ändert, die physikalisch normalerweise nicht möglich ist.

Wenn die Kollisionsgefahr auf unplausible Weise entfallen ist, wird in Schritt S8 der Zählerstand eines Fehlerregisters erhöht. Der Zählerstand dieses Registers wird auch bei einem Neuaufruf der Programmroutine in Schritt S1 nicht zurückgesetzt, sondern kann nur bei einer Systemwartung oder -reparatur zurückgesetzt werden. Somit werden durch das Fehlerregister die Fehlerereignisse während der gesamten Betriebszeit der Sicherheitsvorrichtung fortlaufend gezählt.

Wenn die Kollisionsgefahr weder auf plausible Weise noch auf unplausible Weise entfallen ist, wird in Schritt S9 geprüft, ob die Kollisionsgefahr in dem Sinne akut geworden ist, daß eine automatische Notbremsung über die Schrittstelle 20 veranlaßt werden sollte, um die Kollision zu vermeiden oder, falls dies nicht mehr möglich ist, um zumindest die Kollisionsfolgen zu mildern. Ist dies nicht der Fall, erfolgt ein Rücksprung zu Schritt S5, und die Schritte S5, S7 und S9 werden in einer Schleife wiederholt, bis die Schleife über Schritt S6 oder S8 verlassen wird oder akute Kollisionsgefahr eintritt.

Bei akuter Kollisionsgefahr wird dann in Schritt S 10 die Notbremsung ausgelöst. Danach wird durch die Selbstkontrolleinrichtung 26 in Schritt S11 geprüft, ob die Prädiktionseinrichtung 22 die Kollision als unvermeidlich eingestuft hatte. Wenn dies nicht der Fall ist, wird die Programmroutine mit Schritt S 12 beendet. War die Kollision dagegen als unvermeidlich eingestuft worden, so wird in Schritt S13 etwa anhand des Signals des Crash-Sensors 28 geprüft, ob die Kollision tatsächlich eingetreten ist. Ist dies der Fall, so hat das System fehlerfrei gearbeitet, und die Programmroutine wird in Schritt S 14 beendet.

Wenn hingegen die Kollision entgegen der Vorhersage der Prädiktionseinrichtung nicht eingetreten ist, so bedeutet dies, daß ein gravierender Fehler vorliegt. Eine etwaige Wiederholung eines solchen Fehlers könnte schwerwiegende Folgen haben und ungünstigenfalls zur Verursachung eines Unfalls führen. In diesem Fall wird deshalb in Schritt S15 der Zählerstand des Fehlerregisters um ein Inkrement erhöht, das deutlich größer ist als das Inkrement in Schritt S8. Beispielsweise kann der Zählerstand des Fehlerregisters in Schritt S8 jeweils um 1 erhöht werden und in Schritt S15 um 3.

Im Anschluß an Schritt S8 oder Schritt S 15 wird dann in Schritt S 16 geprüft, ob der Zählerstand des Fehlerregisters einen bestimmten Maximalwert erreicht wird, beispielsweise den Wert 3. Wenn dies der Fall ist, wird in Schritt S16 die Selbstabschaltung der Notbremsfunktion über das Schaltelement 34 veranlaßt, und die Routine wird mit Schritt S 17 beendet. Wenn das Fehlerregister den Maximalwert noch nicht erreicht hat, wird der Schritt S 16 übersprungen.

Eine denkbare Weiterbildung besteht darin, daß im Anschluß an Schritt S15 überprüft wird, ob das Fehlerregister einen höheren zweiten Schwellenwert überschritten hat, und daß bei Überschreitung dieses höheren Schwellenwertes auch der Warnsignalgeber 18 deaktiviert wird, um häufige Fehlwarnungen zu vermeiden.

Eine weitere Verfeinerung des Systems könnte darin bestehen, daß die Überprüfungen in den Schritten S5 und S7, ob die Kollisionsgefahr plausibel oder unplausibel beseitigt wurde, nach Einleitung der Notbremsung in Schritt S 10 noch einmal wiederholt werden. Zwar wäre es aus Sicherheitsgründen problematisch, eine bereits eingeleitete Notbremsung automatisch wieder abzubrechen, dies wäre allenfalls vertretbar, wenn mit Sicherheit festgestellt werden kann, daß die Kollisionsgefahr tatsächlich entfallen ist, doch könnte durch eine solche Verfeinerung die Selbstkontrolle verbessert werden, insbesondere in den Fällen, in denen die Kollision als vermeidbar eingestuft wurde.

Als Beispiel soll der Fall näher betrachtet werden, daß sich die Justage des Radarsensors verändert hat, so daß das Sensorsystem nun falsche Azimutwinkel liefert. Dies kann dazu führen, daß Objekte, die von dem Fahrzeug 10 überholt werden, oder stehende Objekte, an denen das Fahrzeug 16 vorbeifährt, fälschlich als Hindernisse eingestuft werden, die sich auf der Fahrbahn befinden. Eine solche Fehljustierung des Radarsensors hätte jedoch auch zur Folge, daß die georteten Hindernisse eine scheinbare Querbewegung ausführen, da die optische Achse des Sensors nicht mehr mit der Fahrtrichtung des eigenen Fahrzeugs übereinstimmt.

Wenn die Prädiktionseinrichtung 22 so ausgebildet ist, daß sie solche Querbewegungen des Hindernisses bei der Berechnung der Kollisionsgefahr berücksichtigt, können Fehlwarnungen in Schritt S4 in den meisten Fällen vermieden werden, weil die Prädiktionseinrichtung erkennt, daß sich das Hindernis nicht mehr auf der Fahrbahn befinden wird, wenn das eigene Fahrzeug den Ort des Hindernisses erreicht hat. Da jedoch die Breite des Hindernisses im allgemeinen nur ungenau bekannt ist, kann es in Einzelfällen doch noch zu Fehlwarnungen oder zu Fehlauslösungen des Notbremsvorgangs in Schritt S 10 kommen.

Während des Notbremsvorgangs wird dann zu irgendeinem Zeitpunkt das vermeintliche Hindernis aus dem Ortungsbereich des fehljustierten Sensors verschwinden. Es ist dann zu prüfen, ob die Kollisionsgefahr auf plausible Weise entfallen ist, etwa weil das Fahrzeug, von dem die Kollisionsgefahr ausging, tatsächlich abgebogen ist oder die Spur gewechselt hat, oder ob die Kollisionsgefahr lediglich durch die Fehljustierung des Sensors vorgetäuscht war. Ein möglicher Weg, zwischen diesen beiden Fällen zu unterscheiden, besteht darin, daß man die Korrelation zwischen der scheinbaren Querbewegung des Hindernisses und der Relativgeschwindigkeit betrachtet. Bei einem echten Hindernis, etwa einem abbiegenden Vorderfahrzeug, ist die Querbewegung weitgehend unabhängig von der Relativgeschwindigkeit. Bei einem Scheinhindernis, das durch die Fehljustierung des Sensors vorgetäuscht wird, ist dagegen die Quergeschwindigkeit etwa proportional zur Relativgeschwindigkeit, da die Querbewegung ja nur durch die Eigenbewegung des Fahrzeugs 10 vorgetäuscht wird. Wenn im Zuge der Notbremsung das eigene Fahrzeug stark verzögert wird und somit die Relativgeschwindigkeit abnimmt, so stellt man auch eine entsprechende Abnahme der Quergeschwindigkeit des vermeintlichen Hindernisses fest, bis dieses Hindernis schließlich aus dem Ortungsbereich verschwindet. Dieses Muster wäre bei einem realen Hindernis nicht zu erwarten und spricht somit dafür, daß die Kollisionsgefahr unplausibel beseitigt wurde, d.h., daß ein Fehler, nämlich eine Fehljustierung des Sensors vorliegt.

Eine weitere Möglichkeit, Fehlwarnungen oder Fehlauslösungen des Notbremsvorgangs aufgrund einer Fehljustierung des Sensors zu vermeiden, besteht darin, daß man die Häufigkeit von Ereignissen zählt, in denen ein vermeintliches Hindernis auf der Fahrbahn sich mit fortschreitender Annäherung allmählich zur Seite bewegt. Auch hier gibt es eine feste, vom Ausmaß der Fehljustierung abhängige Korrelation zwischen der Querbewegung und der Relativgeschwindigkeit. Wenn sich solche Ereignisse signifikant häufen, kann somit eine Fehljustierung des Sensors erkannt werden und eine entsprechende Fehlermeldung ausgegeben werden, um den Fahrer zu einer Reparatur zu veranlassen.

## Patentansprüche

1. Sicherheitsvorrichtung für Kraftfahrzeuge (10), mit einem Sensorsystem (14) zur Erfassung des Verkehrsumfelds, einer Prädiktionseinrichtung (22) zur Erkennung einer Kollisionsgefahr, wobei die Kollision als unvermeidlich erkannt wird und einem Aktorsystem (18, 20) zur Auslösung einer automatischen Notbremsfunktion in Abhängigkeit von der Kollisionsgefahr, und einer Sefbstkontrolleinrichtung (26), die mindestens einem Sensors (28, 30, 32) zugeordnet ist, anhand dessen Signals der tatsächliche Eintritt einer Kollision feststellbar ist und die dazu ausgebildet ist, die Vorhersage der Prädiktionseinrichtung (22) mit dem tatsächlichen Geschehen zu vergleichen und in Abhängigkeit von einer festgestellten Diskrepanz zumindest eine Teilaktivierung des Aktorsystems (18, 20) zu veranlassen, **dadurch gekennzeichnet, dass** die Selbstkontrolleinrichtung (26) ein Fehlerregister aufweist, zum Zählen der Auftrittshäufigkeit der Diskrepanz zwischen der Vorhersage und dem tatsächlichen Geschehen, und daß die Selbstkontrolleinrichtung (26) dazu ausgebildet ist, die Deaktivierung oder Teil-Deaktivierung des Aktorsystems zu veranlassen indem die Notbremsfunktion automatisch deaktiviert wird, wenn die Auftrittshäufigkeit einen bestimmten Schwellenwert übersteigt und dass die Sicherheitsvorrichtung zusätzlich eine Warnfunktion aufweist, so dass bei der Erkennung einer Fehlfunktion nur diejenigen Aktorkomponenten deaktiviert, die in die Fahrzeugführung eingreifen, während die Warnfunktion bestehen bleibt.

2. Sicherheitsvorrichtung nach Anspruch 1, **dadurch gekennzeichnet, daß** das Aktorsystem einen Warnsignalgeber (18) aufweist, der entweder gar nicht oder unabhängig von dem System (20), das in die Fahrzeugführung eingreift, deaktivierbar ist.

3. Sicherheitsvorrichtung nach Anspruch 1, **dadurch gekennzeichnet, daß** der mindestens eine Sensor (28) zur Feststellung des Eintritts einer Kollision ein Sensor ist, der die Auslösung mindestens eines Airbags des Fahrzeugs registriert.

4. Sicherheitsvorrichtung nach Anspruch 1 oder 3, **dadurch gekennzeichnet, daß** mindestens einer der Sensoren (30, 32) zur Feststellung des Eintritts einer Kollision Teil eines elektronischen Stabilitätssystems des Fahrzeugs ist.

5. Sicherheitsvorrichtung nach einem der vorstehenden Ansprüche, **dadurch gekennzeichnet, daß** die Prädiktionseinrichtung (22) dazu ausgebildet ist, mindestens eine Vorhersage zu generieren, die besagt, daß die Kollision unter bestimmten Bedingungen eintreten wird, und daß die Selbstkontrolleinrichtung (26) dazu ausgebildet ist, zu prüfen, ob diese Bedingungen erfüllt sind.

## Claims

1. Safety device for motor vehicles (10), having a sensor system (14) for sensing the surrounding traffic, a prediction device (22) for detecting a risk of collision, wherein the collision is detected as unavoidable, and an actuator system (18, 20) for triggering an automatic emergency brake function in accordance with the risk of collision, and a self-monitoring device (26) which is assigned to at least one sensor (28, 30, 32) by means of whose signals the actual occurrence of a collision can be detected and which is designed to compare the prediction of the prediction device (22) with the actual event and to bring about at least partial activation of the actuator system (18, 20) in accordance with a detected discrepancy, **characterized in that** the self-monitoring device (26) has a fault register for counting the frequency of occurrence of the discrepancy between the prediction and the actual event, and **in that** the self-monitoring device (26) is designed to bring about the deactivation or partial deactivation of the actuator system by virtue of the fact that the emergency braking function is automatically deactivated if the frequency of occurrence exceeds a specific threshold value, and **in that** the safety device additionally has a warning function so that when a malfunction is detected, only those actuator components which intervene in the driving of the vehicle are deactivated while the warning function is maintained.

2. Safety device according to Claim 1, **characterized in that** the actuator system has a warning signal transmitter (18) which either cannot be deactivated at all or can be deactivated independently of the system (20) which intervenes in the driving of the vehicle.

3. Safety device according to Claim 1, **characterized in that** the at least one sensor (28) for detecting the occurrence of a collision is a sensor which registers the triggering of at least one airbag of the vehicle.

4. Safety device according to Claim 1 or 3, **characterized in that** at least one of the sensors (30, 32) for detecting the occurrence of a collision is part of an electronic stability system of the vehicle.

5. Safety device according to one of the preceding claims, **characterized in that** the prediction device (22) is designed to generate at least one prediction which states that the collision will occur under certain conditions, and **in that** the self-monitoring device (26) is designed to check whether these conditions are met.

## Revendications

1. Dispositif de sécurité de véhicules automobiles (10) comportant un système de capteurs (14) pour saisir l'environnement de circulation, une installation de prévision (22) pour reconnaître un risque de collision selon lequel la collision est reconnue comme inévitable et un système d'actionneurs (18, 20) pour déclencher une fonction de frein de secours automatique selon le risque de collision ainsi qu'une installation d'autocontrôle (26) comportant au moins un capteur (28, 30, 32) dont le signal permet de constater l'arrivée effective d'une collision et qui est réalisé pour comparer la prévision de l'installation prévisionnelle (22) à l'événement effectif et en fonction de l'écart constaté, produire au moins une activation partielle du système d'actionneurs (18, 20),
**caractérisé en ce que**
l'installation d'autocontrôle (26) comporte un registre de défaut pour compter la fréquence d'arrivée des écarts entre la prévision et l'événement effectif et **en ce que** l'installation d'autocontrôle (26) est réalisée pour produire la neutralisation ou la neutralisation partielle du système d'actionneurs en neutralisant automatiquement la fonction de frein de secours si la fréquence d'arrivée dépasse un certain seuil **en ce que** le dispositif de sécurité présente en plus une fonction d'avertissement de façon qu'en reconnaissant une fonction de défaut, seuls seront neutralisés les composants d'actionneur qui interviennent dans la conduite du véhicule alors que les fonctions d'avertissement restent conversées.

2. Dispositif de sécurité selon la revendication 1,
**caractérisé en ce que**
le système d'actionneurs comporte un générateur de signal d'avertissement (18) qui n'est pas du tout neutralisé ou l'est indépendamment du système (20) qui intervient dans la conduite du véhicule.

3. Dispositif de sécurité selon la revendication 1,
**caractérisé en ce qu'**
au moins un capteur (28) pour constater l'arrivée d'une collision est un capteur qui enregistre le déclenchement d'au moins un coussin gonflable du véhicule.

4. Dispositif de sécurité selon la revendication 1 ou 3,
**caractérisé en ce qu'**
au moins l'un des capteurs (30, 32) pour constater l'arrivée d'une collision fait partie d'un système de stabilisation électronique du véhicule.

5. Dispositif de sécurité selon au moins l'une des revendications précédentes,
**caractérisé en ce que**
l'installation de prévision (22) est conçue pour générer au moins une prévision indiquant que la collision ne se produira que dans certaines conditions et **en ce que** l'installation d'autocontrôle (26) est réalisée pour vérifier si ces conditions sont remplies.
